# EUROPEAN PATENT SPECIFICATION

(11) **EP 0 486 274 B1**
(45) Date of publication and mention of the grant of the patent: **12.04.1995**
(21) Application number: 91310464.2
(22) Date of filing: 13.11.1991
(51) Int. Cl.: B60C 3/04

(54) **Pneumatic radial tires and a combination thereof**
Radialer Luftreifen
Pneumatique radial

(30) Priority: 16.11.1990 JP 308756/90; 16.11.1990 JP 308757/90; 25.02.1991 JP 50294/91
(43) Date of publication of application: 20.05.1992
(73) Proprietor: Bridgestone Corporation, Tokyo 104 (JP)
(72) Inventor: Ushikubo, Hisao, Kodaira City, Tokyo (JP); Yamazaki, Tadashi, Kokubunji City, Tokyo (JP); Kamegawa, Tatsuhiko, Kodaira City, Tokyo (JP)
(74) Representative: Whalley, Kevin

(56) References cited:
- EP-A- 0 352 140
- EP-A- 0 393 965
- FR-A- 2 314 059
- GB-A- 2 070 526

## Description

This invention relates to pneumatic radial tires having an excellent high-speed durability and to a combination of pneumatic radial tires to be mounted onto front and rear wheels of a vehicle.

Pneumatic radial tires each comprising a carcass comprised of at least one carcass ply containing radially arranged cords and a belt arranged on an outer peripheral side of a crown portion of the carcass and comprised of a plurality of belt cord layers have many advantages, for example that the motion of tread rubber constituting the ground contacting area of the tire is less owing to a so-called "hoop" effect of the belt as compared with bias tires and that the durability, wear resistance and steering stability are excellent and the rolling resistance is small, so that they are mounted onto many vehicles, particularly as a consequence of recent expansion and development of expressway networks.

On the other hand, the tread portion and bead portion of the pneumatic radial tire are reinforced in accordance with high-speed running requirements accompanied with the performance improvement of the vehicle. However, it is strongly demanded to further improve the high-speed durability of the tire with further enhancement of the performance of the vehicle.

For this end, there have been proposed a technique of varying end count, cord angle and the like of cords constituting the carcass or belt, a technique of adding a new reinforcing member and the like, whereby strain at a position being apt to cause problems or heat generation is suppressed, or the rigidity of the tire casing is increased.

In these conventional techniques, however, the rigidity as a whole of the tire casing unnecessarily increases and a portion excessively increasing the rigidity is produced, which are unfavorable in view of the running performances and ride comfortability of the tire and also cause disadvantages such as increase of cost and the increase in weight of the tire accompanied with the increase of reinforcing members.

It is, therefore, an aim of the present invention to overcome the aforementioned problems and to provide pneumatic radial tires capable of effectively improving high-speed durability even when being applied to the existing tires as well as a combination thereof.

According to a first aspect of the invention, there is provided a pneumatic radial tire comprising a carcass comprised of at least one carcass ply toroidally extending between a pair of bead cores and containing radially arranged cords, each side end portion of at least one ply of which plies being wound around each bead core from the inside toward the outside, and a belt arranged outside a crown portion of the carcass and comprised of a plurality of belt cord layers, characterized in that at least one recess portion continuously extending in the circumferential direction of the tire is arranged on the outer surface of the tire between a shoulder portion and a bead portion and a depth of the bottom of the recess portion is shallower under an inflation of a standard internal pressure than under an inflation of an internal pressure of 0.3 kg/cm² when the tire is mounted on a standard rim.

In a preferable embodiment, the recess portion is comprised of a first arc segment having a curvature center located outside the tire in a radial section of the tire and second arc segments each located adjacent to the inside or outside of the first arc segment in the radial direction of the tire and smoothly extending from the first arc segment and having a curvature center located inside the tire.

In another preferable embodiment, an outer profile length of the recess portion in the radial section of the tire under a standard internal pressure of the tire mounted on a standard rim is within a range of 4-25% of an outer profile length of the tire ranging from a bead base to an equatorial plane of the tire.

In the other preferable embodiment, the bottom of the recess portion is located at a distance of 7-50 mm measured from an end of the belt along a carcass line under a standard internal pressure of the tire mounted on a standard rim.

In a further preferable embodiment, a greater part of the carcass line corresponding to the recess portion under an internal pressure of 0.3 kg/cm² of the tire mounted a standard rim is comprised of a first arc segment having a curvature center located outside the tire in the radial section of the tire, and the remaining portions of the carcass line corresponding to the second arc segments of the recess portion are comprised of second arc segments having a curvature center located inside the tire; or a greater part of the carcass line corresponding to the recess portion is linear in the radial section of the tire, and the remaining portions of the carcass line corresponding to the second arc segments of the recess portion are comprised of second arc segments having a curvature center located inside the tire; or a greater part of the carcass line corresponding to the recess portion is comprised of a first arc segment having a curvature center located inside the tire in the radial section of the tire, and the remaining portions of the carcass line corresponding to the second arc segments of the recess portion are comprised of second arc segments having a curvature center located inside the tire, and a radius of curvature in the first arc segment of the carcass line corresponding to the recess portion is not less than 100 times that of the second arc segment of the carcass line.

According to a second aspect of the invention, there is provided a combination of pneumatic radial tires to be mounted onto front and rear wheels of a vehicle, each of which tires having at least one recess portion at its outer surface located between a shoulder portion and a bead portion and continuously extending in the circumferential direction of the tire; an outer profile length of said recess portion in the radial section of the tire under a standard internal pressure of the tire mounted on a standard rim being within a range of 4-25% of an outer profile length of the tire ranging from a bead base to an equatorial plane of the tire; and a ratio of height of the bottom of the recess portion in the tire to be mounted on a front wheel as measured from a bead base to a tire section height being larger than that of the tire to be mounted on a rear wheel.

The invention will be further described, by way of example only, with reference to the accompanying drawings, in which:
Fig. 1 is a schematically sectional view of an embodiment of the pneumatic radial tire according to the invention in the radial direction of the tire;
Fig. 2 is a partially schematic view showing an expansion state of a profile line of the tire;
Fig. 3 is a schematic view showing an outer profile length of a recess portion in a radial section of the tire;
Figs. 4a to 4c are schematic views showing various embodiments of the carcass line in the tire, respectively;
Fig. 5 is a schematic view showing a difference in size growth in accordance with internal pressure supplied;
Figs. 6a and 6b are schematic views showing bottom positions of recess portions in a combination of tires to be mounted on front and rear wheels of a vehicle; and
Figs. 7a and 7b are schematic views showing a relation between bottom position of the recess portion and expansion position in a combination of tires to be mounted on front and rear wheels, respectively.

In the pneumatic radial tire according to the invention, at least one recess portion formed on the outer surface of the tire between the shoulder portion and the bead portion largely expands in an outward direction of the tire in accordance with the increase of an internal pressure applied to the tire and at the same time a portion of the carcass corresponding to the recess portion largely expands in the same direction, so that tension bearing increases in portions adjacent to the recess portion and carcass portions corresponding thereto as well as the recess portion and carcass portion corresponding thereto, and hence the tire rigidity of the portion forming the recess portion becomes high and particularly the rigidity of the portions adjacent to the recess portion is effectively increased without substantial deformation of the carcass.

Therefore, when the the portions adjacent to the recess portion and capable of increasing the tire rigidity without substantial deformation of the carcass is located, for example, at a given position such as belt end portion, portion near to maximum tire width or the like, the high-speed durability of the tire can effectively be improved under a high tire rigidity without causing cord end separation and other disadvantages resulted from the deformation of the tire.

The reason why the recess portion is formed between the shoulder portion and the bead portion in the tire is due to the fact that when the recess portion is located at a position from the vicinity of the shoulder portion toward the tread portion, strain of rubber is increased due to the expansion of the recess portion and carcass portion corresponding thereto in the outward direction of the tire and hence the belt separation is apt to be caused, while the actual effect developed when the recess portion is formed in the vicinity of the bead portion is poor because the bead portion naturally has a sufficiently high rigidity.

Further, the function of the recess portion can more effectively be developed when the outer profile length of the recess portion in the tire mounted on a standard rim under a standard internal pressure is within a range of 4-25% of outer profile length of the tire ranging from the bead base to the equator of the tire in the radial section of the tire.

When the outer profile length of the recess portion is less than 4%, the expansion amount of the recess portion in the outward direction of the tire can not sufficiently be ensured in the application of internal pressure to the tire mounted on the rim and hence the tension bearing by carcass portions corresponding to the recess portion and portions adjacent thereto cannot be enhanced. On the other hand, when the outer profile length of the recess portion exceeds 25%, a greater part of the tire is expanded in the outward direction, whereby tension applied to the carcass is dispersed and hence the tension bearing by the given portions cannot be increased to the expected extent.

Moreover, when the recess portion consists of a first arc segment having a curvature center located outside the tire and a pair of second arc segments each having a curvature center located inside the tire in the radial section of the tire, the expansion amount of the recess portion can more positively be taken, whereby the tension bearing applied to the carcass can be more enhanced.

In addition, when the bottom of the recess portion is positioned at a distance of 7-50 mm measured from the belt end position along the carcass line under an inflation of a standard internal pressure, the rigidity of tire portion ranging from the belt end to the tread portion can sufficiently be increased.

When the bottom of the recess portion measured from the belt end is less than 7 mm, rubber strain at the belt end portion excessively increases in accordance with the increase of tension bearing by the recess portion and the carcass portion corresponding thereto and hence problems such as separation failure and the like are apt to be caused at the belt end portion, while when the bottom of the recess portion measured from the belt end exceeds 50 mm, the recess portion approaches the bead portion too closely, so that the effect of the carcass contributing to tension bearing at the belt end becomes small as previously mentioned, and also the improving degree of the steering stability is small.

In the tire provided with at least one recess portion in its radial half section, when the tire is mounted on a standard rim and inflated under an internal pressure of 0.3 kg/cm², a greater part of the carcass line corresponding to the recess portion consists of a first arc segment having a curvature center located outside the tire in the radial section of the tire, and portions of the carcass line corresponding to inward and outward portions adjacent to the recess portion in the radial direction consist of second arc segments each having a curvature center located inside the tire, so that the carcass portion corresponding to the recess portion expands outward in the radial direction in the inflation under an internal pressure so as to arrive at a natural equilibrium curve, and hence such an expansion deformation is effectively promoted by the arc shape of the carcass portion, whereby the tension bearing by the carcass portion corresponding to the recess portion and carcass portions adjacent thereto is more increased to sufficiently increase the rigidity of the given portion in the tire and hence the high-speed running performances and high-speed durability can effectively be improved.

In this case, the carcass line corresponding to the portions adjacent to the recess portion is an arc shape having a curvature center located inside the tire and smoothly connected to the carcass portion corresponding to the recess portion having a different curvature, whereby the damage of the carcass due to the stress concentration in a point of the recess portion can be prevented.

Similarly, the above apply to the case that a greater part of the carcass line corresponding to the recess portion is straight in the radial section of the tire and the carcass line portions corresponding to the inner and outer portions adjacent to the recess portion in the radial direction of the tire are an arc shape having a curvature center located inside the tire, and the case that a greater part of the carcass line corresponding to the recess portion is an arc shape having a curvature center located inside the tire in the radial section of the tire and has a radius of curvature larger by 100 times or more than that of the carcass line portions corresponding to the portions adjacent to the recess portion. Moreover, in the latter case, when the radius ratio is less than 100 times, tension cannot be sufficiently borne by the carcass portion corresponding to the recess portion.

Even when the profile of the carcass line is selected from anyone of the above shapes, as the internal pressure of the tire is increased from 0.3 kg/cm², to a standard internal pressure, the expansion amount in the outer surface of the tire at the belt end portion becomes larger than that at the equator of the tire, so that the rigidity of the tire at the belt end portion is particularly increased to improve the ground contacting property of the tire, whereby the high-speed durability, cornering performance and other steering performances as well as wear resistance and the like can considerably be improved.

In the combination of the tires according to the invention, there is provided excellent steering performances to a front wheel tire and a high torque bearing ability to a rear wheel tire when these tires are mounted onto the same vehicle, which is attained by making a ratio of height of bottom of the recess portion as measured from bead base to tire section height in the tire to be mounted on a front wheel larger than that of the tire to be mounted on a rear wheel to increase the rigidity of the front wheel tire at the belt end portion and the rigidity of the rear wheel tire at the sidewall portion, respectively.

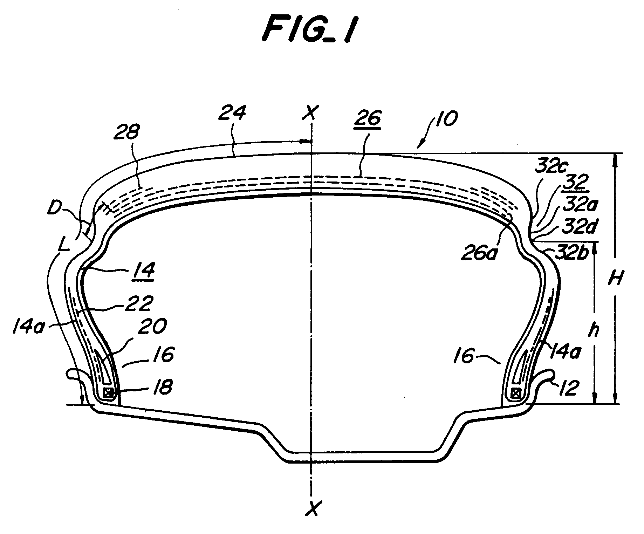

In Fig. 1 is shown a first embodiment of a tire according to the invention in a radial section thereof, which is a state of mounting a tire 10 on a standard rim 12 and inflating under an internal pressure of 0.3 kg/cm².

A carcass 14 is comprised of a carcass ply toroidally extending between a pair of bead portions 16 arranged remote from each other in the axial direction of the tire and containing cords of radial structure therein. In the illustrated embodiment, the carcass 14 is comprised of single carcass ply, each end portion of which ply being wound around a bead core 18 in the bead portion 16 from the inside toward the outside to form a turnup structure. Moreover, the carcass 14 may be comprised of plural carcass plies in accordance with the use purpose of the tire, in which at least one carcass ply is wound around the bead core 18 in the same manner as described above.

A bead filler 20 and a reinforcing layer 22 are arranged between a main body of the carcass 14 and a turnup portion 14a thereof to reinforce a region ranging from the bead portion 16 to a sidewall portion in the tire. Moreover, the number and arranging position of the reinforcing layers 22 are not limited to the illustrated embodiment and may be determined as necessary.

Furthermore, a belt 26 comprised of plural cord layers is arranged on an outside of a crown portion of the carcass 14 in a tread portion 24 constituting a ground contacting area of the tire, in which each side end portion of the belt 26 in the widthwise direction is reinforced with reinforcing layers 28 in a like manner to the known high-speed running radial tire.

According to the invention, at least one recess portion 32 recessed toward the inside of the tire and continuously extending in the circumferential direction of the tire is arranged on the outer surface of the tire 10 between a shoulder portion adjacent to the tread portion 24 and the bead portion 16.

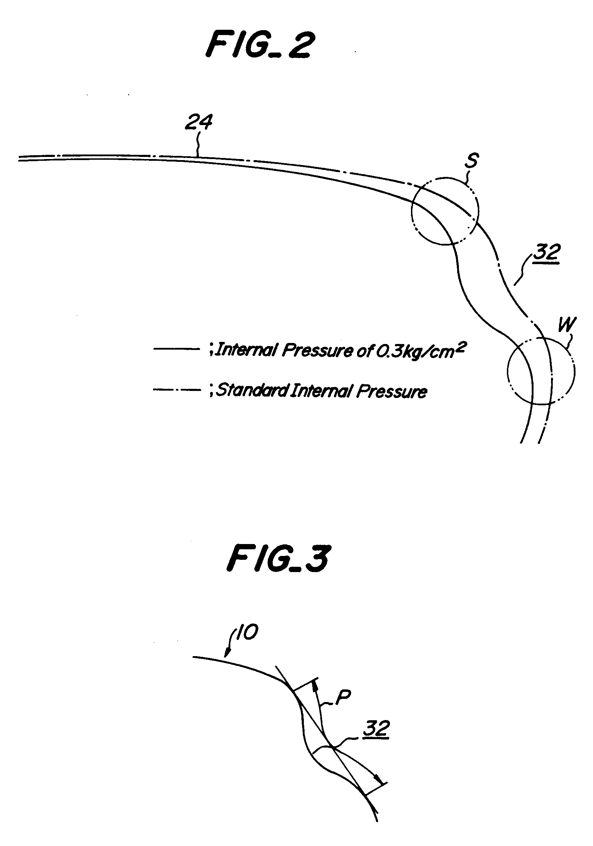

In the pneumatic radial tire of the above structure, the outer profile of the tire largely expands at a portion including the recess portion 32 in an outward direction of the tire as shown in Fig. 2, so that the carcass 14 bears a large tension over a region ranging from a portion corresponding to the recess portion 32 to portions corresponding to inner and outer portions adjacent to the recess portion 32 in the radial direction, for example, a region ranging from a portion W corresponding to a maximum width of the tire to a portion S corresponding to the shoulder portion, whereby the tire rigidity at the portion near to the tire maximum width and at the belt end portion are effectively increased together and at the time the motion of tread rubber at the belt end portion is effectively controlled, and consequently the high-speed durability of the tire is sufficiently enhanced without addition or change of the material in the tire parts and also the steering stability can effectively be improved.

In the invention, the reason why the recess portion 32 is formed between the shoulder portion and the bead portion is due to the fact that the fear of causing separation failure at the belt end portion is removed to sufficiently ensure the actual effect by the formation of the recess portion as previously mentioned.

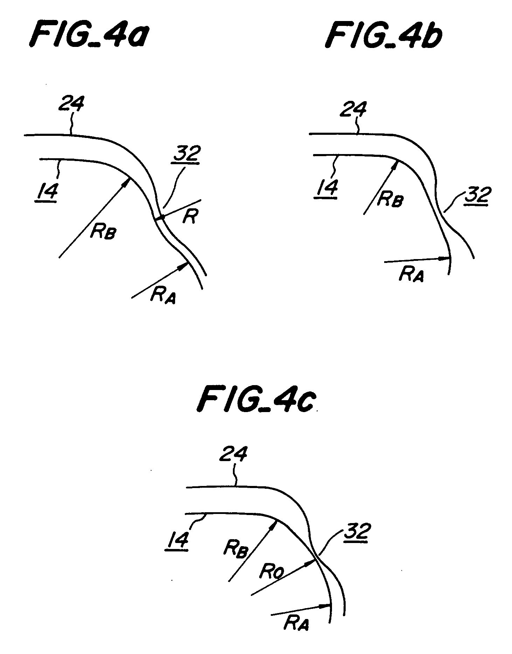

In a more preferable embodiment of the tire, the outer profile length of the recess portion 32 in the tire mounted on a standard rim and inflated under a standard internal pressure is within a range of 4-25%, more preferably 10-20%, of an outer profile length of the tire. The term "outer profile length of tire" used herein means a curved length measured from an equator X-X of the tire to a bead base along the outer profile line in the radial section of the tire as shown by a distance L in Fig. 1. Moreover, when a groove is formed in the surface of the tread portion, the outer profile length of the tire is represented by a length of line segment passing on the surfaces of adjoining island portions divided by the groove portion without passing along the bottom of the groove portion. Further, the term "outer profile length of recess portion" used herein means a curved length between two contact points of a straight line circumscribing with inner and outer portions adjacent to the recess portion 32 in the radial direction of the tire along the outer profile line of the tire as shown by a distance P in Fig. 3.

When the outer profile length P of the recess portion 32 is selected within the above range, the aforementioned function and effect of the recess portion can be better developed.

In other words, when the outer profile length P of the recess portion 32 is less than 4% of the outer profile length L of the tire, the expansion amount of the recess portion in the outward direction of the tire is less and the tension bearing of the carcass cannot be increased to a given extent, while when the outer profile length P exceeds 25%, the expansion region becomes too wide and hence the tension bearing of the carcass cannot be increased to a given extent.

In the tire according to the invention, the bottom 32d of the recess portion is located within a range of 7-50 mm measured from the position of the belt end along the carcass line, whereby the rigidity of a portion ranging from the belt end to the tread portion is enhanced.

When the bottom position of the recess portion is less than 7 mm from the belt end, the recess portion 32 approaches to the belt 26 too closely and hence the tension bearing of the carcass portion corresponding to the recess portion 32 undesirably increases and hence rubber strain at the belt end portion increases together with the expansion displacement of the carcass portion and the separation failure of the belt end portion and other problems are apt to be caused, while when the bottom position of the recess portion exceeds 50 mm from the belt end, the recess portion 32 approaches to the bead portion 16 too closely and hence the effect of the carcass contributing to the tension bearing at the belt end is less and the improving degree of the steering stability becomes small.

In the tire according to the invention, the profile line of the recess portion 32 in the radial section of the tire is formed by three arc segments 32a, 32b, 32c smoothly connecting to each other, so that the expansion amount of the recess portion 32 may be more positively taken as previously mentioned and the tension bearing of the carcass can be further enhanced.

In Figs. 4a to 4c are partially and sectionally shown various embodiments of the carcass line in connection with the recess portion formed in the outer surface of the tire. This is based on the knowledge that in order to effectively improve the high-speed running performances and high-speed durability by sufficiently smoothing the expansion of the carcass in the outward direction of the tire accompanied with the expansion of the recess portion 32 formed in the outer surface of the tire in the same direction to increase the rigidity of the tire at the belt end portion and the portion in the vicinity of the maximum tire width, it is preferable to make different the curvature of the carcass embedded in the recess portion and having a modulus of elasticity larger than that of rubber constituting the outer surface of the tire as a tire reinforcing member, particularly to make the carcass portion corresponding to the recess portion 32 different from curvatures of carcass portions corresponding to inner and outer portions adjacent to the recess portion 32 in the radial direction of the tire.

In the embodiment of Fig. 4a, when the tire is mounted on a standard rim and inflated under an internal pressure of 0.3 kg/cm², a greater part of the carcass line corresponding to the recess portion 32 is an arc segment of a radius R having a curvature center located outside the tire in the radial section of the tire and the carcass line corresponding to inner and outer portions adjacent to the recess portion 32 in the radial direction of the tire are arc segments of radii R_{A} and R_{B} having a curvature center located inside the tire, respectively.

In the embodiment of Fig. 4b, a greater part of the carcass line corresponding to the recess portion 32 is straight in the radial section of the tire and the carcass line corresponding to inner and outer portions adjacent to the recess portion 32 in the radial direction of the tire are arc segments of radii R_{A} and R_{B} having a curvature center located inside the tire, respectively. In the embodiment of Fig. 4c, a greater part of the carcass line corresponding to the recess portion 32 is an arc segment of a radius R_{O} having a curvature center located inside the tire in the radial section of the tire and the carcass line corresponding to inner and outer portions adjacent to the recess portion 32 in the radial direction of the tire are arc segments of radii R_{A} and R_{B} having a curvature center located inside the tire, respectively, and the value of radius R_{O} is made 100 times or more than the values of radii R_{A} and R_{B}.

In these embodiments, when the tire is inflated under an internal pressure to expand the recess portion 32 in the outward direction of the tire, the expansion deformation of the carcass portion corresponding to the recess portion 32 is conducted so as to arrive at a so-called natural equilibrium shape, whereby the expansion change of each of the carcass portion directly and the recess portion indirectly is effectively promoted. Therefore, the tension bearing of the given carcass portion can be increased as expected in accordance with the selection of position and size of the recess portion 32. For example, the high-speed running performances and high-speed durability of the tire can sufficiently be improved by increasing the rigidity of the tire at the belt end portion and at the portion in the vicinity of the maximum tire width.

In Fig. 4c, the reason why the radius R_{O} is 100 times or more than the radii R_{A} and R_{B} is due to the fact that when it is less than 100 times, the tension bearing of the carcass portions corresponding to the recess portion 32 and portions adjacent thereto can not sufficiently be enhanced.

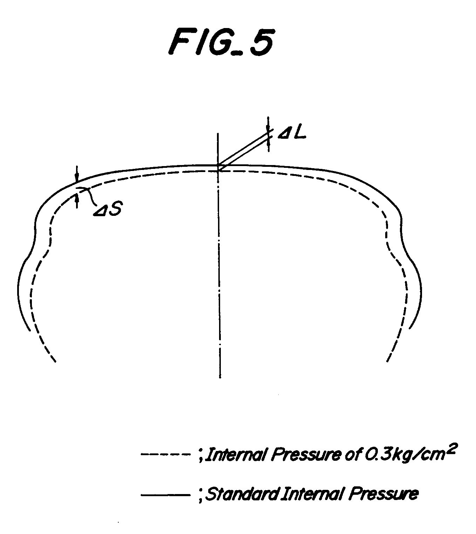

In the tire of the above embodiment, when the internal pressure is increased from 0.3 kg/cm² to a standard internal pressure, as shown in Fig. 5, the expansion amount ΔS at a portion corresponding to the belt end becomes larger than the expansion amount ΔL at the center of the tread portion, and hence the tire rigidity at the tread end portion becomes particularly high and also the ground contacting property of the tire is improved, so that not only the high-speed durability of the tire but also the steering performances inclusive of cornering performance and the wear resistance and the like can effectively be improved.

When the aforementioned tires are actually applied to a vehicle, it is required that the tire to be mounted on a front wheel has excellent steering performances and the tire to be mounted on a rear wheel has an excellent torque durability, so that a combination of tires sufficiently satisfying the above requirements is provided according to the invention.

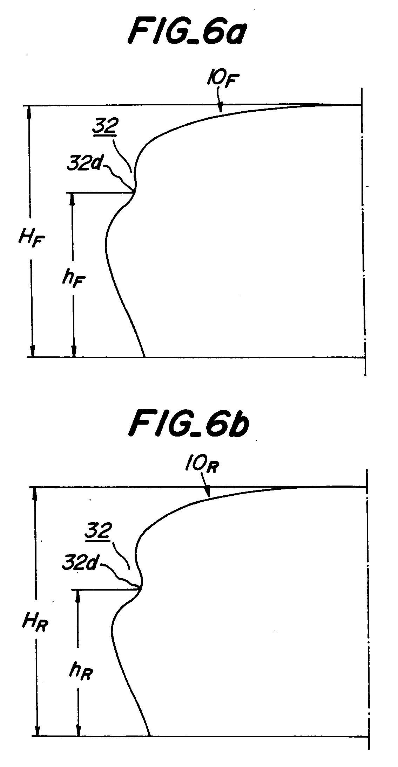

In Fig. 6 is partially shown an embodiment of the tire combination according to the invention, wherein Fig. 6a shows an outer profile of a front tire to be mounted on a front wheel and Fig. 6b shows an outer profile of a rear tire to be mounted on a rear wheel, respectively.

In this embodiment, a ratio of height h_{F} of a bottom 32d of a recess portion 32 measured from bead base to tire section height H_{F} in a front tire 10_{F} (h_{F}/H_{F})is made larger than a ratio of height h_{R} of a bottom 32d of a recess portion 32 measured from bead base to tire section height H_{R} in a rear tire 10_{R} (h_{R}/H_{R}), whereby the position of the bottom 32d in the recess portion of the front tire 10_{F} relatively approaches to the belt end, while the position of the bottom 32d in the recess portion of the rear tire 10_{R} relatively approaches to the bead portion.

As a result, the rigidity of the portion in the vicinity of the belt end in the front tire 10_{F} becomes high to enhance the steering performances of the tire as expected, while the rigidity of the sidewall portion in the rear tire 10_{R} becomes high to improve the traction and braking performances of the tire.

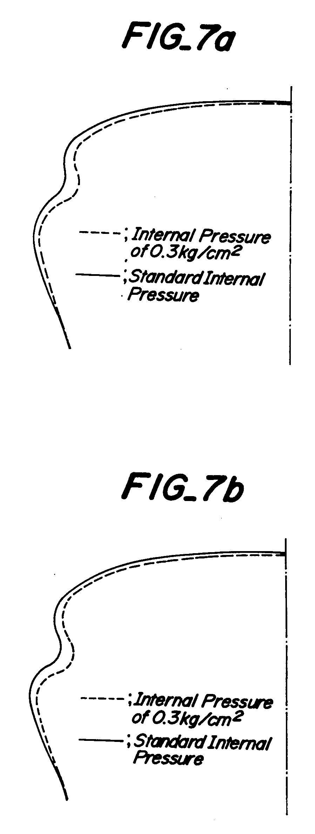

In Fig. 7 is shown a displacement of the outer profile line in the tire shown in Fig. 6. In the front tire of Fig. 7a, the expansion amount of the tire in the vicinity of the shoulder portion becomes particularly large with the increase of the internal pressure, while in the rear tire of Fig. 7b, the expansion amount of the tire in a portion approaching from the shoulder portion toward the maximum tire width becomes particularly large.

In these tires, the recess portion 32 is arranged between the shoulder portion and the bead portion, preferably between the shoulder portion and the maximum tire width, and also the outer profile length L of the recess portion 32 is within a range of 4-25% of the outer profile length P of the tire, so that the combination of these tires can sufficiently achieve the function and effect inherent to the tire according to the invention.

### Test Example 1

A comparison test of high-speed durability between an invention tire and a comparative tire will be described below.

### Ⓞ Test tire: tire size of 255/40ZR 17

### · Invention tire

This tire is a tire having a basic structure shown in Fig. 1 except that the carcass of radial cord arrangement is comprised of two carcass plies each containing nylon-6,6 fiber cords of 1260d/2. In this case, these cords of two plies are arranged at a cord angle of approximately 80° with respect to an equator of the tire and crossed with each other.

In the two carcass plies, the carcass ply located inside the tire is wound around a bead core from the inside toward the outside, while the carcass ply located outside the tire is wound around the bead core from the outside toward the inside.

Furthermore, a reinforcing layer is arranged between the turnup portion of the carcass ply wound from the inside toward the outside and a bead filler arranged above the bead core, and between the turnup portion and the other carcass ply, respectively. Each of these reinforcing layers is comprised of aromatic polyamide fiber cords of 1500d/2 arranged at a cord angle of about 30° with respect to the circumferential direction of the tire and has a maximum height of 43 mm as measured from bead base.

The belt is comprised of two belt layers each containing aromatic polyamide fiber cords of 1500d/2 arranged at a cord angle of about 35° with respect to the equatorial plane of the tire, the cords of which layers being crossed with each other. Furthermore, an auxiliary reinforcing layer is comprised of nylon-6,6 fiber cords of 1260d/2 and wound on the belt end portion in the circumferential direction of the tire to reinforce the belt end portion over a region of about 30% in the widthwise direction of the belt.

Moreover, the recess portion is located in a position that the bottom of the recess portion is approximately 68.6% of the tire section height from bead base when the tire is mounted on a standard rim (9x17) and inflated under a standard internal pressure (2.5 kg/cm²), and has an outer profile length P corresponding to about 9.5% of an outer profile length L of the tire (= 210 mm).

### · Comparative tire

This tire has the same structure as in the invention tire except that the recess portion is not formed in the outer surface of the tire.

### Ⓞ Test method

A drum test for high speed durability is conducted by running the test tire on a drum of 2 m in diameter under a load of about 500 kg at a drum rotating speed of 150 km/h and then increasing the rotating speed stepwise at a rate of 10 km/h every 10 minutes, during which a speed at which a so-called trouble state occurred was determined and the trouble state examined.

### Ⓞ Test results

The test results on these tires are shown in Table 1.

**Table 1**

| | Invention tire | Comparative tire |
|---|---|---|
| Durable speed | 340 km/h × 8 minutes | 320 km/h × 9 minutes |
| Trouble state | tread blow, chunk out 1) | burst (separation at belt end) |

| | | |
|---|---|---|
| 1) This is a thermal breakage of the tread but is not a breakage of tire casing. | | |

As seen from Table 1, the durable speed can effectively be improved in the invention tire as compared with the comparative tire.

### Test Example 2

A comparison test of high-speed durability among invention tires having a given carcass line corresponding to the recess portion and portions adjacent thereto and comparative tires will be described below.

### Ⓞ Test tire: tire size of 255/40ZR 17

### · Invention tire 1

This tire is a tire having the same structure as the invention tire of Test Example 1 except that the carcass line corresponding to the recess portion and portions adjacent thereto has a shape shown in Fig. 4a.

In this case, when the tire is inflated under an internal pressure of 0.3 kg/cm², the radii of curvature R, R_{A} and R_{B} are 100 mm, 40 mm and 40 mm, respectively.

Moreover, the recess portion is located in a position such that the bottom of the recess portion is approximately 68.6% of the tire section height H (= 102 mm) from bead base when the tire is mounted on a standard rim (9x17) and inflated under a standard internal pressure (2.5 kg/cm²).

### · Invention tire 2

This tire has the same structure as in the invention tire 1 except that the carcass line corresponding to the recess portion and portions adjacent thereto has a shape shown in Fig. 4b and the radii of curvature R_{A} and R_{B} are 40 mm and 40 mm, respectively.

### · Invention tire 3

This tire has the same structure as in the invention tire 1 except that the carcass line corresponding to the recess portion and portions adjacent thereto has a shape shown in Fig. 4c and the radii of curvature R_{O}, R_{A} and R_{B} are 5000 mm, 40 mm and 40 mm, respectively.

### · Comparative tire 1

This tire has the same structure as in the invention tire 1 except that the recess portion is not formed in the outer surface of the tire.

### · Comparative tire 2

This tire has the same structure as in the invention tire 3 except that the radius of curvature R_{O} is 80 times the other radii of curvature R_{A}, R_{B}.

### Ⓞ Test method

The drum test for high-speed durability is conducted in the same manner as in Test Example 1.

### Ⓞ Test results

The test results on the above tires are shown in Table 2.

**Table 2**

| | Invention tire 1 | Invention tire 2 | Invention tire 3 | Comparative tire 1 | Comparative tire 2 |
|---|---|---|---|---|---|
| Durable speed | 360 km/h × 9 minutes | 360 km/h × 2 minutes | 350 km/h × 8 minutes | 320 km/h × 5 minutes | 320 km/h × 8 minutes |
| Trouble state | tread blow, chunk out 1) | tread blow, chunk out 1) | tread blow, chunk out 1) | burst (separation at belt end) | burst (separation at belt end) |

| | | | | | |
|---|---|---|---|---|---|
| 1) This is a thermal breakage of the tread but is not a breakage of tire casing. | | | | | |

As seen from Table 2, the durable speed can largely be improved in all of the invention tires as compared with the comparative tires.

### Test Example 3

A comparison test between a combination of invention tires and a combination of comparative tires will be described with respect to steering stability and lap time.

### Ⓞ Test tire

A front tire has a tire size of 205/50 ZR 17, and a rear tire has a tire size of 255/40 ZR 17.

### · Invention tire

The basic structure of the tire used is the same as the invention tire of Test Example 1. These tires are mounted on a standard rim for front wheel (7x17) and a standard rim for rear wheel (9x17), respectively and inflated under a standard internal pressure (2.5 kg/cm²). In the front tire, the bottom of the recess portion is located at a height corresponding to about 77.6% of tire section height H (= 103 mm) measured from bead base and has an outer profile length P corresponding to about 10.3% of an outer profile length of the tire L (= 185 mm), while the recess portion in the rear tire is located at a height corresponding to about 68.6% of tire section height H (= 102 mm) measured from bead base and has an outer profile length P corresponding to about 9.5% of an outer profile length of the tire L (= 210 mm).

### · Comparative tire

The front and rear tires are the same as the invention tires except that the recess portion is not formed in the outer surface of the tire.

### Ⓞ Test method

The steering stability and lap time are evaluated by a feeling during the running on a circuit course and a time required for the completion of running on the circuit course when the front and rear tires are actually mounted on a vehicle.

Moreover, the evaluation of the steering stability is represented by an index value on the basis that the comparative tire is control. The larger the index value, the better the property.

### Ⓞ Test results

The test results on the steering stability and lap time are shown in Table 3.

**Table 3**

| | Invention tire | Comparative tire |
|---|---|---|
| Lap time | -2 (seconds) | 0 |
| Steering stability | 120 | 100 |

As seen from Table 3, the invention tire has excellent steering stability and lap time as compared with the comparative tire.

As mentioned above, according to the invention, the high-speed durability of the tire can effectively be improved by arranging at least one recess portion on the outer surface of the tire between the shoulder portion and the bead portion.

Furthermore, in the combination of tires according to the invention, the steering stability and lap time can sufficiently be improved in addition to the high-speed durability.

## Claims

1. A pneumatic radial tire (10) comprising a carcass (14) comprised of at least one carcass ply toroidally extending between a pair of bead cores (18) and containing radially arranged cords, each side end portion of at least one ply of which plies being wound around each bead core from the inside toward the outside, and a belt (26) arranged outside a crown portion of the carcass and comprised of a plurality of belt cord layers, characterized in that at least one recess portion (32) continuously extending in the circumferential direction of the tire is arranged on the outer surface of the tire between a shoulder portion (S) and a bead portion (16) and a depth of the bottom (32d) of the recess portion is shallower under an inflation of a standard internal pressure than under an inflation of an internal pressure of 0.3 kg/cm² when the tire is mounted on a standard rim (12).

2. A pneumatic radial tire as claimed in claim 1, characterized in that an outward expansion amount of the tire at an end portion of the belt is larger than an outward expansion amount of the tire at an equatorial plane (X-X) when internal pressure is increased from 0.3 kg/cm² to standard internal pressure.

3. A pneumatic radial tire as claimed in claim 1 or 2, characterized in that said recess portion (32) continuously extends in the circumferential direction of the tire between a shoulder portion (S) and a position of a maximum tire width (W).

4. A pneumatic radial tire as claimed in any of claims 1 to 3, characterized in that said recess portion (32) when the tire is mounted on a standard rim and inflated under an internal pressure of 0.3 kg/cm² is comprised of a first arc segment (32a) having a curvature center located outside the tire in a radial section of the tire and second arc segments (32b, 32c) each located adjacent inside or outside of the first arc segment in the radial direction of the tire and smoothly extending from the first arc segment and having a curvature center located inside the tire.

5. A pneumatic radial tire as claimed in any of claims 1 to 4, characterized in that an outer profile length (P) of said recess portion (32) in the radial section of the tire under a standard internal pressure of the tire mounted on a standard rim is within a range of 4-25% of an outer profile length (L) of the tire ranging from a bead base to an equatorial plane (X-X) of the tire.

6. A pneumatic radial tire as claimed in claim 5, characterized in that said outer profile length (P) of the recess portion (32) is within a range of 10-20% of said outer profile length (L) of the tire.

7. A pneumatic radial tire as claimed in any of claims 1 to 6, characterized in that a bottom (32d) of said recess portion (32) is located at a distance of 7-50 mm measured from an end of the belt along a carcass line under a standard internal pressure of the tire mounted on a standard rim.

8. A pneumatic radial tire as claimed in any of claims 1 to 7, characterized in that a greater part of the carcass line corresponding to said recess portion (32) under an internal pressure of 0.3 kg/cm² of the tire mounted a standard rim is comprised of a first arc segment (R) having a curvature center located outside the tire in the radial section of the tire, and the remaining portions of the carcass line corresponding to portions adjacent to the recess portion are comprised of second arc segments (R_{A}, R_{B}) having a curvature center located inside the tire.

9. A pneumatic radial tire as claimed in any of claims 1 to 7, characterized in that a greater part of the carcass line corresponding to said recess portion (32) under an internal pressure of 0.3 kg/cm² of the tire mounted a standard rim is linear in the radial section of the tire, and the remaining portions of the carcass line corresponding to portions adjacent to the recess portion are comprised of second arc segments (R_{A}, R_{B}) having a curvature center located inside the tire.

10. A pneumatic radial tire as claimed in any of claims 1 to 7, characterized in that a greater part of the carcass line corresponding to said recess portion (32) under an internal pressure of 0.3 kg/cm² of the tire mounted a standard rim is comprised of a first arc segment (R_{O}) having a curvature center located inside the tire in the radial section of the tire, and the remaining portions of the carcass line corresponding to portions adjacent to the recess portion are comprised of second arc segments (R_{A}, R_{B}) having a curvature center also located inside the tire, and a radius of curvature in the said first arc segment of the carcass line corresponding to the recess portion is not less than 100 times that of the said second arc segment of the carcass line.

11. A combination of pneumatic radial tires (10) to be mounted onto front and rear wheels of a vehicle, each of which tires having at least one recess portion (32) at its outer surface located between a shoulder portion and a bead portion and continuously extending in the circumferential direction of the tire; an outer profile length of said recess portion in the radial section of the tire under a standard internal pressure of the tire mounted on a standard rim being within a range of 4-25% of an outer profile length of the tire ranging from a bead base to an equatorial plane of the tire; and a ratio of height (h_{F}) of the bottom (32d) of the recess portion in the tire (10_{F}) to be mounted on a front wheel as measured from a bead base to a tire section height (H) being larger than that (h_{R}) of the tire (10_{R}) to be mounted on a rear wheel.

## Patentansprüche

1. Radialer Luftreifen (10), mit einer Karkasse (14), die aus mindestens einer Karkassenlage besteht, die sich toroidförmig zwischen zwei Wulstkernen (18) erstreckt und radial angeordnete Cordfäden enthält, wobei jeder Seitenrandbereich von mindestens einer Lage dieser Lagen von innen nach außen um jeden Wulstkern herumgeführt ist, und mit einem Gürtel (26), der außerhalb eines Kronenbereichs der Karkasse angeordnet ist und aus einer Vielzahl von Gürtelcordschichten besteht, dadurch gekennzeichnet, daß mindestens ein Aussparungsbereich (32), der sich kontinuierlich in der Umfangsrichtung des Reifens erstreckt, in der äußeren Oberfläche des Reifens zwischen einem Schulterbereich (S) und einem Wulstbereich (16) angeordnet ist, und bei einem auf einer Standardfelge (12) angebrachten Reifen die Tiefe des Bodens (32d) des Aussparungsbereichs bei einem Standard-Innendruck des Reifens geringer ist als bei einem Innendruck von 0,3 kg/cm².

2. Radialer Luftreifen gemäß Anspruch 1, dadurch gekennzeichnet, daß die äußere Ausdehnung des Reifens bei einem Randbereich des Gürtels größer ist als die äußere Ausdehnung des Reifens bei der Äquatorebene (X-X), wenn der Innendruck von 0,3 kg/cm² auf den Standard-Innendruck erhöht wird.

3. Radialer Luftreifen gemäß Anspruch 1 oder 2, dadurch gekennzeichnet, daß der Aussparungsbereich (32) sich zwischen einem Schulterbereich (S) und einer Position (W) mit maximaler Reifenbreite in der Umfangsrichtung des Reifens kontinuierlich erstreckt.

4. Radialer Luftreifen gemäß irgendeinem der Ansprüche 1 bis 3, dadurch gekennzeichnet, daß der Aussparungsbereich (32) bei einem auf einer Standardfelge montierten und bis auf einen Innendruck von 0,3 kg/cm² aufgeblasenen Reifen besteht aus einem ersten Bogensegment (32a), dessen Krümmungsmittelpunkt in einem radialen Schnitt des Reifens außerhalb des Reifens gelegen ist, und aus zweiten Bogensegmenten (32b, 32c), die in der radialen Richtung des Reifens innerhalb bzw. außerhalb an das erste Bogensegment angrenzen und sich an das erste Bogensegment glatt anschließen und einen innerhalb des Reifens gelegenen Krümmungsmittelpunkt haben.

5. Radialer Luftreifen gemäß irgendeinem der Ansprüche 1 bis 4, dadurch gekennzeichnet, daß die äußere Profillänge (P) des Aussparungsbereichs (32) in dem radialen Schnitt des Reifens bei Standard-Innendruck des auf einer Standardfelge montierten Reifens innerhalb eines Bereichs von 4-25% einer äußeren Profillänge (L) des Reifens liegt, die von der Wulstbasis bis zu der Äquatorebene (X-X) des Reifens reicht.

6. Radialer Luftreifen gemäß Anspruch 5, dadurch gekennzeichnet, daß die äußere Profillänge (P) des Aussparungsbereichs (32) innerhalb eines Bereichs von 10-20% der äußeren Profillänge (L) des Reifens liegt.

7. Radialer Luftreifen gemäß irgendeinem der Ansprüche 1 bis 6, dadurch gekennzeichnet, daß bei dem Standard-Innendruck des auf einer Standardfelge montierten Reifens der Boden (32d) des Aussparungsbereichs (32) bei Messung längs einer Karkassenlinie in einer Entfernung von 7-50 mm von dem Rand des Gürtels gelegen ist.

8. Radialer Luftreifen gemäß irgendeinem der Ansprüche 1 bis 7, dadurch gekennzeichnet, daß bei einem Innendruck von 0,3 kg/cm² des auf einer Standardfelge montierten Reifens ein größerer Teil der Karkassenlinie, der dem Aussparungsbereich (32) entspricht, aus einem ersten Bogensegment (R) besteht, dessen Krümmungsmittelpunkt in dem radialen Schnitt des Reifens außerhalb des Reifens gelegen ist, und die verbleibenden Bereiche der Karkassenlinie, die an den Aussparungsbereich angrenzenden Bereichen entsprechen, aus zweiten Bogensegmenten (R_{A}, R_{B}) bestehen, deren Krümmungsmittelpunkt innerhalb des Reifens gelegen ist.

9. Radialer Luftreifen gemäß irgendeinem der Ansprüche 1 bis 7, dadurch gekennzeichnet, daß bei einem Innendruck von 0,3 kg/cm² des auf einer Standardfelge montierten Reifens ein größerer Teil der Karkassenlinie, der dem Aussparungsbereich (32) entspricht, in dem radialen Schnitt des Reifens linear ist, und die verbleibenden Bereiche der Karkassenlinie, die an den Aussparungsbereich angrenzenden Bereichen entsprechen, aus zweiten Bogensegmenten (R_{A}, R_{B}) bestehen, deren Krümmungsmittelpunkt innerhalb des Reifens gelegen ist.

10. Radialer Luftreifen gemäß irgendeinem der Ansprüche 1 bis 7, dadurch gekennzeichnet, daß bei einem Innendruck von 0,3 kg/cm² des auf einer Standardfelge montierten Reifens ein größerer Teil der Karkassenlinie, der dem Aussparungsbereich (32) entspricht, aus einem ersten Bogensegment (R_{O}) besteht, dessen Krümmungsmittelpunkt in dem radialen Schnitt des Reifens innerhalb des Reifens gelegen ist, und die verbleibenden Bereiche der Karkassenlinie, die an den Aussparungsbereich angrenzenden Bereichen entsprechen, aus zweiten Bogensegmenten (R_{A}, R_{B}) bestehen, deren Krümmungsmittelpunkt ebenfalls innerhalb des Reifens gelegen ist, und der Krümmungsradius des ersten Bogensegments der Karkassenlinie, das dem Aussparungsbereich entspricht, mindestens 100 Mal so groß ist wie der Krümmungsradius der zweiten Bogensegmente der Karkassenlinie.

11. Kombination von auf den Vorder- und Hinterrädern eines Fahrzeugs zu montierenden, radialen Luftreifen (10), wobei jeder dieser Reifen in seiner äußeren Oberfläche mindestens einen Aussparungsbereich (32) hat, der zwischen einem Schulterbereich und einem Wulstbereich gelegen ist und sich in der Umfangsrichtung des Reifens kontinuierlich erstreckt; die äußere Profillänge des Aussparungsbereichs in dem radialen Schnitt des Reifens bei dem Standard-Innendruck des auf einer Standard-Felge montierten Reifens innerhalb eines Bereichs von 4-25% der äußeren Profillänge des Reifens liegt, die von der Wulstbasis bis zu der Äquatorebene des Reifens reicht; und das Verhältnis der ab der Wulstbasis gemessenen Höhe (h_{F}) des Bodens (32d) des Aussparungsbereichs zu der Reifenschnitthöhe (H) bei dem auf einem Vorderrad zu montierenden Reifen (10_{F}) größer ist als das Verhältnis der Höhe (h_{R}) zu der Reifenschnitthöhe (H) bei dem auf einem Hinterrad zu montierenden Reifen (10_{R}).

## Revendications

1. Bandage pneumatique radial (10) comprenant une carcasse (14) qui comprend au moins une nappe de carcasse s'étendant de façon toroïdale entre une paire de tringles de talons (18) et contenant des câblés arrangés en direction radiale, chaque portion terminale latérale d'au moins une nappe desdites nappes étant enroulée autour de chaque tringle de talon depuis l'intérieur vers l'extérieur, ainsi qu'une ceinture (26) arrangée à l'extérieur d'une portion de couronne de la carcasse, et qui comprend plusieurs couches de câblés de ceinture, caractérisé en ce qu'au moins une portion d'évidement (32) s'étendant en continu dans la direction circonférentielle du bandage pneumatique est arrangée sur la surface externe du bandage pneumatique entre une portion d'épaulement (S) et une portion de talon (16), le fond (32d) de la portion d'évidement se trouvant, à l'état gonflé avec une pression interne normale, à une profondeur moindre que celle existant à l'état gonflé avec une pression interne de 0,3 kg/cm² lorsque le bandage pneumatique est monté sur sa jante nominale (12).

2. Bandage pneumatique radial selon la revendication 1, caractérisé en ce que la valeur d'élargissement du bandage pneumatique vers l'extérieur à la portion terminale de la ceinture est supérieure à la valeur d'élargissement du bandage pneumatique vers l'extérieur au plan équatorial (X-X) lorsqu'on augmente la pression interne de 0,3 kg/cm² à la pression interne normale.

3. Bandage pneumatique radial selon la revendication 1 ou 2, caractérisé en ce que ladite portion d'évidement (32) s'étend en continu dans la direction circonférentielle du bandage pneumatique entre une portion d'épaulement (S) et une position correspondant à la largeur maximale (W) du bandage pneumatique.

4. Bandage pneumatique radial selon l'une quelconque des revendications 1 à 3, caractérisé en ce que ladite portion d'évidement (32), lorsque le bandage pneumatique est monté sur sa jante nominale et gonflé avec une pression interne de 0,3 kg/cm², comprend un premier segment arqué (32a) dont le centre de courbure est situé à l'extérieur du bandage pneumatique dans une coupe radiale du bandage pneumatique et des seconds segments arqués (32b, 32c) dont chacun est disposé en position adjacente à l'intérieur ou à l'extérieur du premier segment arqué dans la direction radiale du bandage pneumatique et s'étendant de manière uniforme depuis le premier segment arqué, leurs centres de courbure étant situés à l'intérieur du bandage pneumatique.

5. Bandage pneumatique radial selon l'une quelconque des revendications 1 à 4, caractérisé en ce que la longueur de profil externe (P) de ladite portion d'évidement (32) en coupe radiale du bandage pneumatique sous une pression interne normale du bandage pneumatique monté sur sa jante nominale, se situe dans le domaine de 4-25% de la longueur de profil externe (L) du bandage pneumatique s'étendant depuis la base de talon jusqu'au plan équatorial (X-X) du bandage pneumatique.

6. Bandage pneumatique radial selon la revendication 5, caractérisé en ce que ladite longueur de profil externe (P) de la portion d'évidement (32) se situe dans le domaine de 10-20% de ladite longueur de profil externe (L) du bandage pneumatique.

7. Bandage pneumatique radial selon l'une quelconque des revendications 1 à 6, caractérisé en ce que le fond (32d) de ladite portion d'évidement (32) est situé à une distance de 7-50 mm mesurée à partir d'une extrémité de la ceinture le long de la ligne de carcasse sous une pression interne normale du bandage pneumatique monté sur sa jante nominale.

8. Bandage pneumatique radial selon l'une quelconque des revendications 1 à 7, caractérisé en ce que la majeure partie de la ligne de carcasse correspondant à ladite portion d'évidement (32) sous une pression interne de 0,3 kg/cm² du bandage pneumatique monté sur sa jante nominale, comprend un premier segment arqué (R) dont le centre de courbure est situé à l'extérieur du bandage pneumatique en coupe radiale du bandage pneumatique, et les portions restantes de la ligne de carcasse correspondant aux portions adjacentes à la portion d'évidement comprennent des seconds segments arqués (R_{A}, R_{B}) dont le centre de courbure est situé à l'intérieur du bandage pneumatique.

9. Bandage pneumatique radial selon l'une quelconque des revendications 1 à 7, caractérisé en ce que la majeure partie de la ligne de carcasse correspondant à ladite portion d'évidement (32) sous une pression interne de 0,3 kg/cm² du bandage pneumatique monté sur sa jante nominale est linéaire en coupe radiale du bandage pneumatique, et les portions restantes de la ligne de carcasse correspondant aux portions adjacentes à la portion d'évidement comprennent des seconds segments arqués (R_{A}, R_{B}) dont le centre de courbure est situé à l'intérieur du bandage pneumatique.

10. Bandage pneumatique radial selon l'une quelconque des revendications 1 à 7, caractérisé en ce que la majeure partie de la ligne de carcasse correspondant à ladite portion d'évidement (32) sous une pression interne de 0,3 kg/cm² du bandage pneumatique monté sur sa jante nominale comprend un premier segment arqué (R_{O}) dont le centre de courbure est situé à l'intérieur du bandage pneumatique en coupe radiale du bandage pneumatique, et les portions restantes de la ligne de carcasse correspondant aux portions adjacentes à la portion d'évidement comprennent des seconds segments arqués (R_{A}, R_{B}) dont le centre de courbure est également situé à l'intérieur du bandage pneumatique, et le rayon de courbure dans ledit premier segment arqué de la ligne de carcasse correspondant à la portion d'évidement n'est pas inférieur à 100 fois celui dudit second segment arqué de la ligne de carcasse.

11. Combinaison de bandages pneumatiques radiaux (10) destinés à être montés sur des roues avant et arrière d'un véhicule, chacun desdits bandages pneumatiques comportant au moins une portion d'évidement (32) à sa surface externe située entre une portion d'épaulement et une portion de talon, et s'étendant en continu dans la direction circonférentielle du bandage pneumatique; une longueur de profil externe de ladite portion d'évidement en coupe radiale du bandage pneumatique sous une pression interne normale du bandage pneumatique monté sur sa jante nominale, se situe dans le domaine de 4-25% de la longueur de profil externe du bandage pneumatique s'étendant depuis la base de talon jusqu'au plan équatorial du bandage pneumatique; le rapport de la hauteur (h_{F}) du fond (32d) de la portion d'évidement dans le bandage pneumatique (10_{F}) qui doit être monté sur une roue avant, telle que mesurée depuis la base de talon jusqu'à la hauteur de section (H) du bandage pneumatique, est supérieur au rapport de la hauteur (h_{R}) du bandage pneumatique (10_{R}) qui doit être monté sur une roue arrière.
